# EUROPÄISCHE PATENTSCHRIFT

(11) **EP 1 932 749 B1**
(45) Veröffentlichungstag und Bekanntmachung des Hinweises auf die Patenterteilung: **17.03.2010**
(21) Anmeldenummer: 07020145.4
(22) Anmeldetag: 15.10.2007
(51) Int. Cl.: B62D 25/08, B60Q 1/04

(54) **Endmodul, insbesondere Frontendmodul für ein Fahrzeug sowie Verfahren zur Montage eines Endmoduls an eine Fahrzeugkarosserie**
End module, in particular front end module for a vehicle and method for assembling a front end module to the bodywork of a vehicle
Module terminal, en particulier module de fronts pour un véhicule, ainsi que procédé de montage d'un module terminal sur la carrosserie d'un véhicule

(30) Priorität: 13.12.2006 DE 102006058857
(43) Veröffentlichungstag der Anmeldung: 18.06.2008
(73) Patentinhaber: Volkswagen Aktiengesellschaft, 38436 Wolfsburg (DE)
(72) Erfinder: Böhme, Rainer, 31039 Rheden (DE); Wichert, Volker, 38440 Wolfsburg (DE); Reichhardt, Dierk, 38442 Wolfsburg (DE); Kirschner, Manfred, 38368 Rennau (DE); Klein, Roland, 38442 Wolfsburg (DE)

(56) Entgegenhaltungen:
- EP-A- 1 481 878
- EP-A- 1 544 035
- EP-A- 1 623 873

## Beschreibung

Die Erfindung betrifft ein Kraftfahrzeug-Endmodul, insbesondere Kraftfahrzeug-Frontendmodul, nach dem Oberbegriff des Patentanspruches 1.

Frontendmodule mit montierten Scheinwerfern sowie montierter Stoßfängerabdeckung werden in einer automatischen Frontendmontage an der jeweiligen Fahrzeugkarosserie befestigt. Aus optischen Gründen ist es dabei von Bedeutung, dass die Spaltmaße bzw. die Fugen zwischen den endmodulseitigen Scheinwerfern und den karosserieseitigen Kotflügeln trotz oftmals größerer Maßabweichungen der Karosserie gleichmäßig gestaltet sind.

Aus der EP-A-1 544 035 ist ein gattungsgemäßes Frontendmodul für ein Fahrzeug bekannt. Das Frontendmodul weist jeweils in Fahrzeugquerrichtung abragende untere Scheinwerferträger auf, die zusammen mit jeweils einem oberen Trägerteil einen zur Fahrzeugseite offenen Rahmen bilden, der den Scheinwerfer umgibt. Das obere Trägerteil ist jeweils einstückig am Frontendträger angeformt. Außerdem ist der Scheinwerfer in starrer Befestigung am oberen Trägerteil des Frontendträgers angebunden.

Aus der EP-A-1 623 873 ist ein Frontendmodul bekannt, bei dem der Scheinwerfer über Befestigungspunkte an einem unteren Scheinwerferträger befestigt ist, nicht jedoch an einem oberen Scheinwerferträger. Aus der EP-A-1 481 878 ist ebenfalls ein Frontendmodul für ein Kraftfahrzeug bekannt, bei dem am Frontendträger seitlich jeweils geschlossene Trägerrahmen vorgesehen sind, in denen die Scheinwerfer montiert sind. Die Scheinwerfer sind dabei nicht flexibel, sondern fest am Trägerrahmen angebunden.

Aus der EP 1 232 932 B1 ist ein Frontendmodul bekannt. Das Frontendmodul weist einen Scheinwerferträger als ein in sich elastisch verformbares, separates Bauteil auf, das an einem Endmodul-Montageträger montiert ist. Der Scheinwerfer wird zusammen mit dem karosserieseitigen Kotflügel an einem gemeinsamen Referenzbefestigungspunkt am Scheinwerferträger befestigt. Durch die Befestigung des Scheinwerfers und des Kotflügels am gemeinsamen Referenzbefestigungspunkt werden der Scheinwerfer und der Kotflügel trotz Lagetoleranzen des Kotflügels zueinander selbsttätig ausgerichtet. Um mechanische Spannungen zwischen dem Kotflügel, dem Scheinwerfer und dem Scheinwerferträger zu vermeiden, kann sich der Scheinwerferträger verbiegen.

Der gemeinsame Referenzbefestigungspunkt muss in einer sowohl für die Scheinwerferbefestigung als auch für die Kotflügelbefestigung günstigen Lage angeordnet sein. Dadurch gestaltet sich eine solche gemeinsame Befestigung konstruktiv aufwändig.

Die Aufgabe der Erfindung besteht darin, ein Kraftfahrzeug-Endmodul, insbesondere ein Kraftfahrzeug-Frontendmodul, bereitzustellen, bei dem die Scheinwerfer einfach gegenüber der Karosserie ausgerichtet werden können.

Die Aufgabe der Erfindung ist durch die Merkmale des Patentanspruches 1 gelöst.

Gemäß dem kennzeichnenden Teils des Patentanspruches 1 weist der Scheinwerferträger zumindest einen ersten Referenzbefestigungspunkt zur Befestigung des Scheinwerfers und zumindest einen, davon beabstandeten zweiten Referenzbefestigungspunkt zur Befestigung der Fahrzeugkarosserie auf. Dadurch können sowohl der erste Referenzbefestigungspunkt als auch der zweite Referenzbefestigungspunkt seitlich voneinander beabstandet in einer zur Scheinwerferbefestigung bzw. zur Karosseriebefestigung günstigen Lage angeordnet werden.

Referenzbefestigungspunkte sind dabei solche Befestigungspunkte, die eine spielfreie Positionierung des Scheinwerfers bzw. der Fahrzeugkarosserie in der Referenzlage ermöglichen, in welcher die Karosserie und der Scheinwerfer mit gleichmäßiger Fuge lagerichtig zueinander ausgerichtet sind.

Um bei der Montage des Scheinwerferträgers des Frontendmoduls am karosserieseitigen Kotflügel Verspannungen zu vermeiden, die aufgrund von karosserieseitigen Maßabweichungen entstehen, kann der Scheinwerferträger elastisch verformbar ausgebildet sein.

Besonders vorteilhaft ist es, wenn der Scheinwerferträger nicht insgesamt über seine gesamte Länge elastisch verformbar ist, sondern lediglich an einem Ausgleichsabschnitt eine, gegenüber den verbleibenden Scheinwerferträgerabschnitten reduzierte Formstabilität aufweist. Auf diese Weise kann der Scheinwerferträger einen spannungsfreien Längenausgleich in der Fahrzeuglängs- und/oder -querrichtung ausführen. Hierbei kann der Scheinwerferträger zwischen den beiden beabstandeten Referenzpunkten starr, d. h. mit einer, gegenüber dem verbleibenden Scheinwerferträger-Abschnitten wesentlich reduzierten Elastizität ausgebildet sein. Auf diese Weise ist sichergestellt, dass trotz der voneinander beabstandeten Referenzpunkte der Scheinwerfer und die Fahrzeugkarosserie zueinander lagerichtig angeordnet bleiben.

In einer besonderen Ausführungsform kann der Ausgleichsabschnitt nach Art eines Filmscharniers eine Schwenkachse bilden, um die der Trägerarm des Scheinwerferträgers flexibel schwenkbar ist. Dadurch kann der Scheinwerfer definiert um eine Schwenkachse schwenken, um karosserieseitige Maßabweichungen auszugleichen. Hierzu kann der Ausgleichsabschnitt zwei Trägerarme des Scheinwerferträgers gelenkig miteinander verbinden. Fertigungstechnisch bevorzugt ist es, wenn der Ausgleichsabschnitt die beiden Trägerarm materialeinheitlich und einstückig verbindet.

Nach einer anderen bevorzugten Ausführungsform ist der Ausgleichsabschnitt in Form einer auseinanderziehbaren bzw. zusammenpressbaren Blattfeder ausgebildet. Die beiden Teile des Ausgleichsabschnitts können symmetrisch bzw. unsymmetrisch auseinander gezogen werden. Im ersten Fall wird der Ausgleichsabschnitt z. B. eine gleichmäßige Ellipsenform annehmen, die gestaucht bzw. gebaucht wird. Dies bedeutet eine Ausdehnung bzw. Zusammenpressung nur in y-Richtung. Im zweiten Fall wird der Ausgleichsabschnitt eher eine ungleichmäßige Ellipsenform (Tropfenform) annehmen. Hierdurch wird neben der Längenvariabilität in y-Richtung auch eine solche in x-Richtung ermöglicht.

Dabei kann der Scheinwerferträger über den einen Trägerarm am Frontendträger angebunden sein. Am anderen Trägerarm des Scheinwerferträgers können dagegen die ersten und zweiten Referenzbefestigungspunkte zur Befestigung des Scheinwerfers bzw. der Fahrzeugkarosserie angeordnet sein. Auf diese Weise ist sicher verhindert, dass sich die ersten und zweiten Referenzbefestigungspunkte zueinander verlagern.

Im Gegensatz dazu ist der Scheinwerferträger gemäß dem Stand der Technik in sich elastisch ausgebildet, ohne eine vordefinierte Biegeschwenkachse bzw. einen Ausgleichsabschnitt bereitzustellen. Schon aus diesem Grunde muss der Schweinwerfer und der Kotflügel an einem **-** im Gegensatz zur Erfindung - gemeinsamen Referenzbefestigungspunkt am Scheinwerferträger befestigt serin. Bei Anwendung eines solchen, in sich elastisch verformbaren Scheinwerferträgers besteht die Gefahr, dass sich voneinander beabstandete erste und zweite Referenzpunkte gegeneinander verlagern können.

Bevorzugt kann das Endmodul einen mittig angeordneten Frontend-Montageträger aufweisen, an dem der Scheinwerferträger als ein separates Bauteil angebunden ist. Auf diese Weise kann der Scheinwerferträger auch gegenüber dem Frontend-Montageträger für einen Toleranzausgleich geringfügig verlagert werden.

Die beiden Trägerarme des Scheinwerferträgers können mit geringer Elastizität ausgebildet sein, während der Scharnierabschnitt eine vergleichsweise hohe Elastizität aufweist. Der Scharnierabschnitt kann dabei die bereits erwähnte Schwenkachse ausbilden, die sich im Wesentlichen in der Fahrzeughochrichtung erstreckt.

Für eine stabile Befestigung des Scheinwerfers bildet der Scheinwerferträger zusammen mit einem oberen Trägerteil einen zur Fahrzeugseite offenen Rahmen, der den Scheinwerfer umgibt. Auf diese Weise kann der Scheinwerfer in etwa einer Dreipunktlagerung oder in einer Vierpunktlagerung zwischen dem oberen Trägerteil und dem Scheinwerferträger befestigt sein. Es sind auch andere Mehrpunktlagerungen, wie eine Fünfpunktlagerung, denkbar.

Nachfolgend ist ein Ausführungsbeispiel der Erfindung anhand der Figuren beschrieben.

Es zeigen:
- Fig. 1: in einer Teilansicht von vorne ein an der Fahrzeugkarosserie montiertes Frontendmodul;
- Fig. 2: eine im Wesentlichen der Ansicht der Fig. 1 entsprechende Teilansicht bei entfernter Frontklappe sowie entfernter Stoßfängerabdeckung; und
- Fig. 3: eine der Fig. 2 entsprechende Ansicht von hinten.

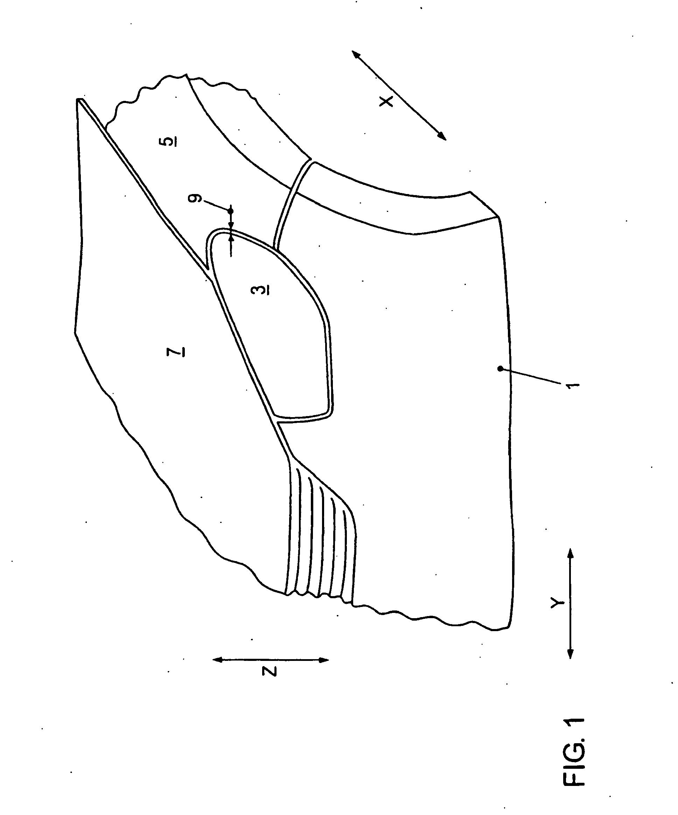

In der Fig. 1 ist in einer Teilansicht von vorne eine Fahrzeugkarosserie mit einem fertig montierten Frontendmodul gezeigt. Das Frontendmodul trägt unter anderem die teilweise dargestellte Stoßfänger-Abdeckung 1 sowie den Scheinwerfer 3 und ist bekanntermaßen in einer Modulbauweise frontseitig in die Fahrzeugkarosserie eingesetzt. Wie aus der Fig. 1 hervorgeht, ist der Scheinwerfer 3 umfangsseitig begrenzt durch die Stoßfänger-Abdeckung 1, einem vorderen Ende des karosserieseitigen Kotflügels 5 sowie einer Frontklappe 7, und zwar beabstandet über eine Scheinwerferfuge 9. Die Scheinwerferfuge 9 umgibt den Scheinwerfer 3 mit einem gleichmäßigen Spaltmaß.

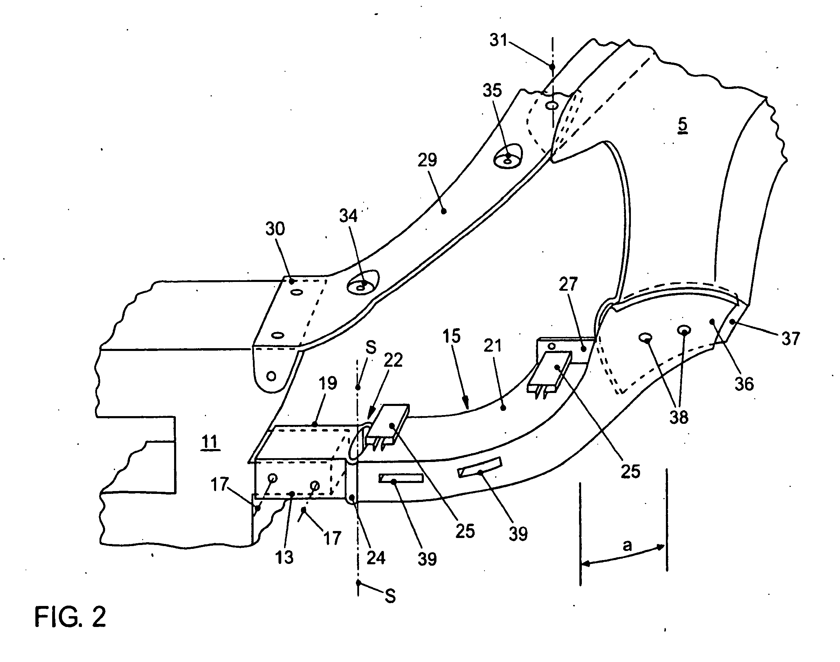

In der Fig. 2 sind die Stoßfänger-Abdeckung 1, der Scheinwerfer 3 sowie die Frontklappe 7 aus Gründen der Übersichtlichkeit weggelassen. Demzufolge weist das Frontendmodul einen in Fahrzeugquerrichtung y mittig angeordneten Montagerahmen 11 zur Aufnahme eines nicht gezeigten Kühlers auf. Der Montagerahmen 11 ist als ein Kunststoffspritzgussteil ausgebildet, an dessen Seite eine Haltekonsole 13 angeformt ist, an der ein Scheinwerferträger 15 mittels angedeuteter Schraubverbindungen 17 befestigt ist.

Die Schraubverbindungen 17 können mittels Hohlschrauben realisiert sein, mit deren Hilfe ein zusätzlicher Toleranzausgleich in den x-, y- und z-Richtungen ermöglicht ist. Für den Fall, dass etwa die Scheinwerferfuge 9 zwischen dem Scheinwerfer 3 und der Frontklappe 7 keilförmig verläuft, kann über diese Hohlschrauben der Fugenverlauf entsprechend korrigiert werden.

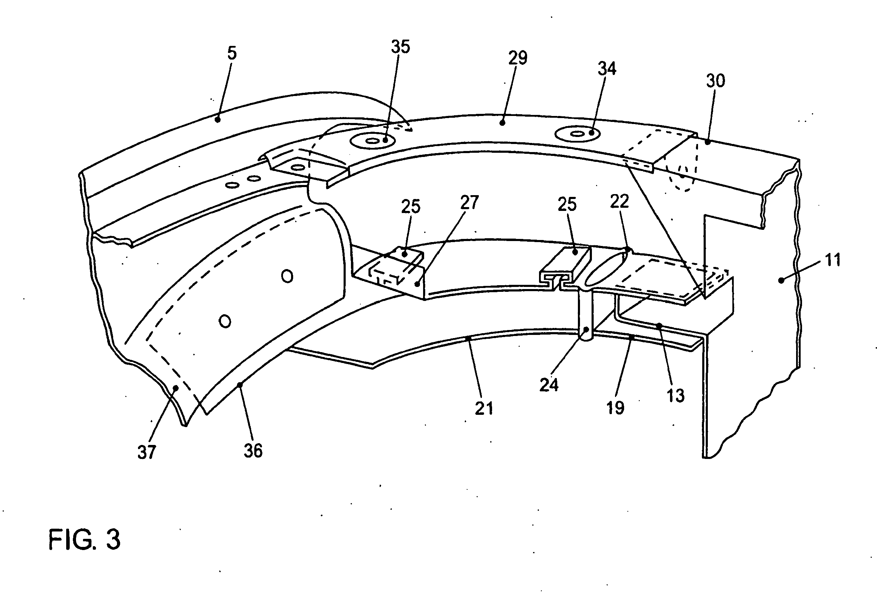

Wie aus den Fig. 2 und 3 hervorgeht, ist der Scheinwerferträger 15 aus zwei U-profilförmigen starren Trägerarmen 19 und 21 ausgebildet, die über einen Scharnierabschnitt 22 oder Ausgleichsabschnitt miteinander einstückig und materialeinheitlich verbunden sind. Der Scharnierabschnitt 22 bzw. Ausgleichsabschnitt verbindet die beiden Trägerarme 19 und 21 über voneinander beabstandete Stege 24 mit reduzierter Materialstärke. Die Stege 24 wirken als Filmscharniere und gestatten eine begrenzte Schwenkbewegung des Trägerarms 21 um die gezeigte Schwenkachse S. Die Schwenkachse S erstreckt sich in etwa in der z-Richtung. Es ist auch möglich, dass der Ausgleichsabschnitt nach Art einer Blattfeder ausgebildet ist.

Auf einer Oberseite des Trägerarms 21 sind beispielhaft als erste Referenzbefestigungspunkte voneinander beabstandete T-Nutführungen 25 angeformt, auf denen der Scheinwerfer 3 mit entsprechenden T-Nuten frontseitig bis zu einem Anschlag 27 in seine Referenzlage aufschiebbar ist. Alternativ kann der Scheinwerfer 3 auch über nur einen ersten Referenzbefestigungspunkt 25 befestigt sein.

Aufgrund der im Wesentlichen spielfreien Passung zwischen dem T-Nutführungen 25 und den komplementären T-Nuten des Scheinwerfers 3 ist der Scheinwerfer 3 in der Referenzlage mit sehr geringer Toleranz nahezu spielfrei zum Scheinwerferträger 15 ausgerichtet. Diese Referenzlage wird über eine nicht gezeigte Rastverbindung zwischen dem Scheinwerferträger 15 und dem Scheinwerfer 3 gesichert. Zusätzlich kann der Scheinwerfer 3 mit einem nicht gezeigten Positionierstift versehen sein. Bei der Vormontage des Scheinwerfers 3 auf den Scheinwerferträger 15 kann der Positionierstift mit geringer Toleranz in das in der Fig. 2 gezeigte Positionierloch im Anschlag 27 geschoben werden. Nach erfolgter Montage des Scheinwerfers 3 auf dem Scheinwerferträger 15 ist der Scheinwerfer 3 in den x-, y- und z-Richtungen ausgerichtet.

Gemäß den Fig. 2 und 3 ist dem Scheinwerferträger 15 ein oberes Trägerteil 29 zugeordnet, das an einem Ende mit einer oberen Haltekonsole 30 des Montageträgers 11 in x-Richtung und z-Richtung und mit dem anderen Ende oberseitig über einen Montagepunkt 31 mit dem Kotflügel 5 verschraubt ist. Das obere Trägerteil 29 weist zwei weitere Befestigungspunkte 34, 35 zur Befestigung des Scheinwerfers 3 auf.

Der Scheinwerferträger 15 ist an seinem freien äußeren Ende mit einem schalenförmigen Flächenanschlag 36 ausgebildet, der außenseitig auf einem komplementär gebildeten Anschlag 37 des Kotflügels 5 aufgeschoben ist. Die beiden Seitenanschläge 36, 37 sind über Schraubverbindungen 38 als zweite Referenzbefestigungspunkte miteinander verbunden.

Die beiden ersten Referenzbefestigungspunkte 25 zur spielfreien sowie starren Befestigung des Scheinwerfers 3 sowie die beiden zweiten Referenzbefestigungspunkte 38 zur Befestigung des Scheinwerferträgers 15 am Kotflügel 5 sind voneinander um einen Abstand a beabstandet jeweils in einer für die jeweilige Scheinwerferbefestigung bzw. Kotflügelbefestigung günstigen Lage angeordnet.

Außerdem weist der Scheinwerferträger 15 an seinem Trägerarm 21 zwei Rastausnehmungen 39 auf, in die die Stoßfänger-Abdeckung 1 einrastbar ist. Zusätzliche, nicht dargestellte Anbindungspunkte für die Stoßfänger-Abdeckung 1 sind im Bereich des Flächenanschlags 36 des Scheinwerferträgers 15 vorgesehen.

Bei der Frontendmodul-Montage wird zunächst der Scheinwerfer 3,auf die T-Nutführungen 25, 26 aufgeschoben und in seiner Referenzlage verrastet. Hierbei ist grundsätzlich eine der beiden T-Nutführungen ausreichend, insbesondere die in Figur 2 rechts dargestellte. Anschließend wird der Scheinwerfer 3 über flexible Laschen an den Befestigungspunkten 34, 35 des oberen Trägerteils 29 geheftet. Durch die flexiblen Laschen des Scheinwerfers 3 sowie durch das Heften können mechanische Spannungen im Bereich des oberen Trägerteils 29 verhindert werden.

Beim Einfahren des Frontendmoduls in die Karosserie wird der äußere Trägerarm 21 des Scheinwerferträgers 15 mit seinem Flächenanschlag 36 außenseitig auf den Anschlag 37 des Kotflügels 5 geschoben und mit diesem an den Referenzbefestigungspunkten 38 verschraubt. Maßabweichungen des karosserieseitigen Kotflügels 5 können aufgrund einer Schwenkbewegung des Trägerarms 21 um die Schwenkachse S spannungsfrei ausgeglichen werden. Dadurch ist selbsttätig zwischen dem Scheinwerfer 3 und dem Kotflügel 5 eine Scheinwerferfuge 9 mit gleichmäßigem Spaltmaß hergestellt. Gleichzeitig wird das obere Trägerteil 29 innenseitig auf einen Kotflügelflansch geschoben und mit diesem über die Verschraubung 31 befestigt. Da der Scheinwerfer 3 bereits sehr genau zum Scheinwerferträger 15 ausgerichtet ist, passt nach der Verschraubung des Scheinwerferträgers 15 mit der Karosserie 5 auch der Scheinwerfer 3 lagerichtig zur Karosserie 5.

### Bezugszeichenliste

- 1: Stoßfänger-Abdeckung
- 3: Scheinwerfer
- 5: Kotflügel
- 7: Frontklappe
- 9: Scheinwerferfuge
- 11: Montagerahmen
- 13: Haltekonsole des Montagerahmens 11
- 15: Scheinwerferträger
- 17: Schraubverbindungen
- 19, 21: Trägerarme des Scheinwerferträgers 15
- 24: Stege
- 25: T-Nutführungen
- 27: Anschlag
- 29: oberes Trägerteil
- 30: Haltekonsole des Montagerahmens 11
- 31: Schraubverbindung
- 34, 35: Befestigungspunkte
- 36: freies Ende des Scheinwerferträgers
- 37: kotflügelseitiger Anschlag
- 39: Rastausnehmungen
- S: Schwenkachse

## Patentansprüche

1. Kraftfahrzeug-Frontendmodul mit zumindest einem seitlichen Scheinwerferträger (15), an dem der Scheinwerfer (3) und die Fahrzeugkarosserie (5) in einer Referenzlage befestigt sind, in der der Scheinwerfer (3) und die Fahrzeugkarosserie (5) zueinander lagerichtig angeordnet sind, wobei der Scheinwerferträger (15) zumindest einen ersten Referenzbefestigungspunkt (25) zur Befestigung des Scheinwerfers (3) und zumindest einen, über einen Abstand (a) davon beabstandeten zweiten Referenzbefestigungspunkt (38) zur Befestigung der Fahrzeugkarosserie (5) aufweist, und wobei der Scheinwerferträger (15) zusammen mit einem oberen Trägerteil (29) einen zur Fahrzeugseite offenen Rahmen bilden, der den Scheinwerfer (3) umgibt, **dadurch gekennzeichnet dass** das obere Trägerteil (29) in Fahrzeuglängs- und -hochrichtung (x, z) mit einer oberen Haltekonsole (30) eines Frontendträgers (11) verschraubt ist, und dass der Scheinwerfer (3) über zumindest eine flexible Lasche an zumindest einem Befestigungspunkt (34, 35) des oberen Trägerteils (29) befestigt ist.

2. Kraftfahrzeug-Frontendmodul nach Anspruch 1, **dadurch gekennzeichnet, dass** der Scheinwerferträger (15) zwischen den beiden, über den Abstand (a) beabstandeten Referenzpunkten (25, 38) mit einer gegenüber den verbleibenden Scheinwerferträger-Abschnitten wesentlich reduzierten Elastizität ausgebildet ist.

3. Kraftfahrzeug-Frontendmodul nach Anspruch 1 oder 2, **dadurch gekennzeichnet, dass** der Scheinwerferträger (15) zwei starre Trägerarme (19, 21) aufweist, die über einen Ausgleichsabschnitt (22) materialeinheitlich und einstückig beweglich miteinander verbunden sind.

4. Kraftfahrzeug-Frontendmodul nach Anspruch 3, **dadurch gekennzeichnet, dass** die beiden Trägerarme (19, 21) des Scheinwerferträgers (15) in einer Fahrzeugquerrichtung (y) und/oder Fahrzeuglängsrichtung (x) zueinander beweglich sind.

5. Kraftfahrzeug-Frontendmodul nach Anspruch 3 oder 4, **dadurch gekennzeichnet, dass** der Scheinwerferträger (15) über den einen Trägerarm (19) an einem Frontendträger (11) anbindbar ist.

6. Kraftfahrzeug-Frontendmodul nach Anspruch 5, **dadurch gekennzeichnet, dass** am anderen Trägerarm (21) die ersten und zweiten Befestigungspunkte (25, 38) angeordnet sind.

7. Kraftfahrzeug-Frontendmodul nach einem der vorhergehenden Ansprüche, **dadurch gekennzeichnet, dass** der Scheinwerferträger (15) als separates Bauteil am Frontendträger (11) montierbar ist.

8. Kraftfahrzeug-Frontendmodul nach einem der Ansprüche 3 bis 7, **dadurch gekennzeichnet, dass** der Ausgleichsabschnitt (22) nach Art eines Filmscharniers eine Schwenkachse (S) bildet, um die der Trägerarm (21) des Scheinwerferträgers (15) flexibel schwenkbar ist.

9. Kraftfahrzeug-Frontendmodul nach einem der Ansprüche 3 bis 7, **dadurch gekennzeichnet, dass** der Ausgleichsabschnitt (22) nach Art einer Blattfeder ausgebildet ist, mittels derer der Trägerarm (21) des Scheinwerferträgers (15) eine Längenvariabilität aufweist.

10. Kraftfahrzeug-Frontendmodul nach einem der vorhergehenden Ansprüche, **dadurch gekennzeichnet, dass** der Scheinwerfer (3) in einer Vierpunktlagerung zwischen dem oberen Trägerteil (29) und dem Scheinwerferträger (15) befestigt ist.

## Claims

1. Motor vehicle front end module having at least one lateral headlamp support (15) to which the headlamp (3) and the vehicle body (5) are fastened in a reference position in which the headlamp (3) and the vehicle body (5) are arranged so as to be positioned correctly relative to one another, with the headlamp support (15) having at least one first reference fastening point (25) for fastening the headlamp (3) and at least one second reference fastening point (38), which is spaced apart from said first reference fastening point (25) by a distance (a), for fastening the vehicle body (5), and with the headlamp support (15) together with an upper support part (29) forming a frame which is open to the side of the vehicle, which frame surrounds the headlamp (3), **characterized in that** the upper support part (29) is screwed in the vehicle longitudinal and vertical direction (x, z) to an upper holding bracket (30) of a front-end beam (11), and **in that** the headlamp (3) is fastened by means of at least one flexible lug to at least one fastening point (34, 35) of the upper support part (29).

2. Motor vehicle front end module according to Claim 1, **characterized in that** the headlamp support (15) is formed, between the two reference points (25, 38) which are spaced apart by the distance (a), with an elasticity which is significantly reduced in relation to the rest of the headlamp support sections.

3. Motor vehicle front end module according to Claim 1 or 2, **characterized in that** the headlamp support (15) has two rigid support arms (19, 21) which are movably connected to one another in a materially integral and unipartite fashion by means of a compensating section (22).

4. Motor vehicle front end module according to Claim 2, **characterized in that** the two support arms (19, 21) of the headlamp support (15) are movable relative to one another in a vehicle transverse direction (y) and/or vehicle longitudinal direction (x).

5. Motor vehicle front end module according to Claim 3 or 4, **characterized in that** the headlamp support (15) can be connected by means of one support arm (19) to the front-end beam (11).

6. Motor vehicle front end module according to Claim 5, **characterized in that** the first and second fastening points (25, 38) are arranged on the other support arm (21).

7. Motor vehicle front end module according to one of the preceding claims, **characterized in that** the headlamp support (15) can be mounted as a separate component on the front-end beam (11).

8. Motor vehicle front end module according to one of Claims 3 to 7, **characterized in that** the compensating section (22) forms, in the manner of a film hinge, a pivot axis (S) about which the support arm (21) of the headlamp support (15) can be pivoted in a flexible manner.

9. Motor vehicle front end module according to one of Claims 3 to 7, **characterized in that** the compensating section (22) is formed in the manner of a leaf spring, by means of which the support arm (21) of the headlamp support (15) can be varied in length.

10. Motor vehicle front end module according to one of the preceding claims, **characterized in that** the headlamp (3) is fastened between the upper support part (29) and the headlamp support (15) by means of a four-point mounting arrangement.

## Revendications

1. Module d'extrémité avant de véhicule automobile doté d'au moins un support de phare (15) latéral au niveau duquel le phare (3) et la carrosserie d'un véhicule (5) épousent une position de référence dans laquelle la position du phare (3) et de la carrosserie d'un véhicule (5) est ajustée, le support de phare (15) comportant au moins un premier point de fixation de référence (25) pour fixer le phare (3) et au moins un deuxième point de fixation de référence (38) placé à une certaine distance (a) de celui-ci pour fixer la carrosserie d'un véhicule (5), et le support de phare (15) formant, conjointement avec une partie de support supérieure (29), un cadre ouvert sur le côté du véhicule, qui ceint le phare (3), **caractérisé en ce que** la partie de support supérieure (29) est vissée, dans la direction longitudinale et verticale du véhicule (x, z), avec une console d'immobilisation (30) supérieure d'un support d'extrémité avant (11) et que le phare (3) est fixé à au moins un point de fixation (34, 35) de la partie de support supérieure (29) via au moins une bride flexible.

2. Module d'extrémité avant de véhicule automobile selon la revendication 1, **caractérisé en ce que** le support de phare (15) est réalisé entre les deux points de référence (25, 38) espacés de la distance (a), avec une élasticité pour l'essentiel réduite par rapport aux segments de support de phare restants.

3. Module d'extrémité avant de véhicule automobile selon la revendication 1 ou 2, **caractérisé en ce que** le support de phare (15) comporte deux bras de support (19, 21) rigides reliés entre eux via un segment d'équilibrage (22) par le biais d'une unité de matériaux et d'une réalisation d'un seul tenant.

4. Module d'extrémité avant de véhicule automobile selon la revendication 3, **caractérisé en ce que** les deux bras de support (19, 21) du support de phare (15) sont mobiles l'un par rapport à l'autre dans la direction transversale du véhicule (y) et/ou dans la direction longitudinale du véhicule (x).

5. Module d'extrémité avant de véhicule automobile selon la revendication 3 ou 4, **caractérisé en ce que** le support de phare (15) peut être raccordé à un support d'extrémité avant (11) via un bras de support (19).

6. Module d'extrémité avant de véhicule automobile selon la revendication 5, **caractérisé en ce que** les premier et deuxième points de fixation (25, 38) sont disposés au niveau de l'autre bras de,support (21).

7. Module d'extrémité avant de véhicule automobile selon l'une quelconque des revendications précédentes, **caractérisé en ce que** le support de phare (15) prend la forme d'un élément séparé pouvant être monté au niveau du support d'extrémité avant (11).

8. Module d'extrémité avant de véhicule automobile selon l'une quelconque des revendications 3 à 7, **caractérisé en ce que** le segment d'équilibrage (22) forme, comme une charnière pelliculée, un axe de pivotement (S) autour duquel le bras de support (21) du support de phare (15) peut pivoter de façon flexible.

9. Module d'extrémité avant de véhicule automobile selon l'une quelconque des revendications 3 à 7, **caractérisé en ce que** le segment d'équilibrage (22) est réalisé sous la forme d'un ressort à lame permettant au bras de support (21) du support de phare (15) de varier en longueur.

10. Module d'extrémité avant de véhicule automobile selon l'une quelconque des revendications précédentes, **caractérisé en ce que** le phare (3) est fixé dans un logement à quatre points positionné entre la partie de support supérieure (29) et le support de phare (15).
